Europäisches Patentamt

European Patent Office

Office européen des brevets

(19)

(11) Veröffentlichungsnummer : **0 335 180 B1**

## (12) EUROPÄISCHE PATENTSCHRIFT

(45) Veröffentlichungstag der Patentschrift :
**29.07.92 Patentblatt 92/31**

(51) Int. Cl.$^5$ : **H02P 7/62**

(21) Anmeldenummer : **89104648.4**

(22) Anmeldetag : **15.03.89**

(54) Vorrichtung zur Lastwinkelregelung eines Stromrichters.

(30) Priorität : **28.03.88 DE 3810502**

(43) Veröffentlichungstag der Anmeldung :
**04.10.89 Patentblatt 89/40**

(45) Bekanntmachung des Hinweises auf die
Patenterteilung :
**29.07.92 Patentblatt 92/31**

(84) Benannte Vertragsstaaten :
**CH DE FR GB LI SE**

(56) Entgegenhaltungen :
**EP-A- 0 019 138**
**DE-A- 3 528 887**

(56) Entgegenhaltungen :
**SIEMENS FORSCHUNGS- UND ENTWICK-**
**LUNGSBERICHTE, Band 1, Nr. 1/72, 1972, Sei-**
**ten 184-193, Springer Verlag, Berlin, DE;**
**F.BLASCHKE: "Das Verfahren der Feldorien-**
**tierung zur Regelung der Asynchronmaschi-**
**ne"**

(73) Patentinhaber : **SIEMENS**
**AKTIENGESELLSCHAFT**
**Wittelsbacherplatz 2**
**W-8000 München 2 (DE)**

(72) Erfinder : **Trauth, Gerhard, Dipl.-Ing.**
**Strassberg 6**
**W-8520 Erlangen (DE)**
Erfinder : **Reng, Leonhard, Dipl.-Ing.**
**Georg-Krauss-Strasse 8**
**W-8520 Erlangen (DE)**

## Beschreibung

Die Erfindung betrifft eine Vorrichtung zur Lastwinkelregelung eines Stromrichters mit Drehstromausgang mit den Merkmalen des Oberbegriffs des Anspruchs 1.

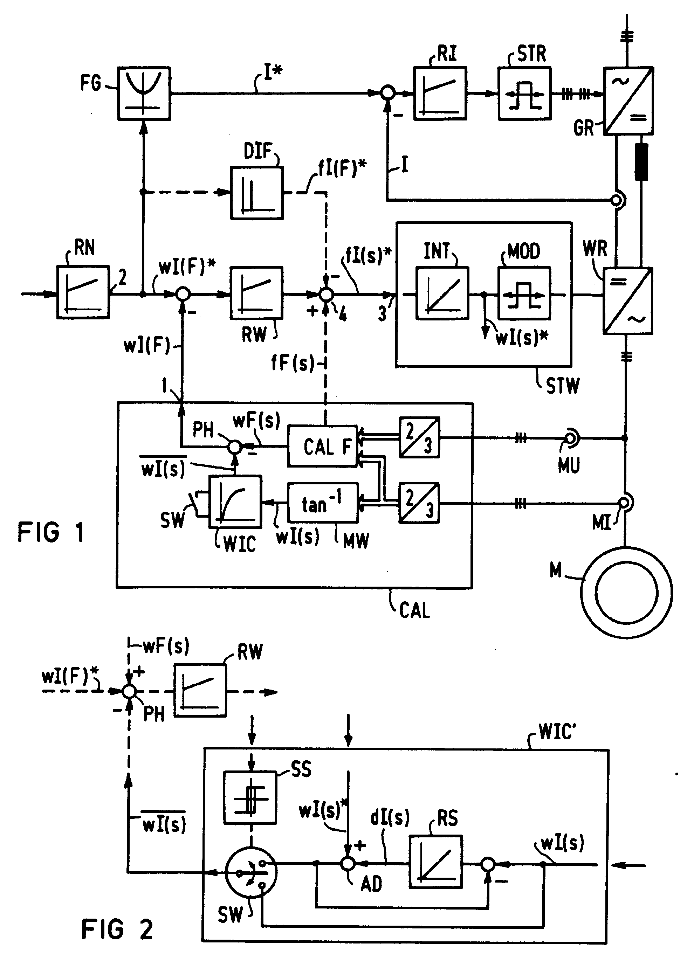

Bevorzugtes Anwendungsgebiet ist der Betrieb einer umrichtergespeisten Drehfeldmaschine mit einer Phasenwinkelregelung für die Ständerströme. Die verwendeten Umrichter besitzen vorteilhaft einen Gleichstromeingang, dessen Gleichstrom auf einen Sollwert für die Amplitude der Umrichter-Ausgangsströme geregelt oder gesteuert wird. In FIG 1 ist eine derartige Anordnung gezeigt, wie sie in der DE-OS 29 19 852 (= VPA 79 P 3075) beschrieben ist.

Dabei ist die Drehfeldmaschine M (hier eine Asynchronmaschine) an einen maschinenseitigen Wechselrichter WR angeschlossen, dessen Gleichstromeingänge über einen Gleichstrom-Zwischenkreis mit einem netzseitigen Gleichrichter GR verbunden ist. Dieser netzseitige Gleichrichter GR wird von einem Steuersatz STR gesteuert, dessen Steuerspannung an einen Stromregler RI für die Amplitude I der Ausgangsströme bzw. des Zwischenkreis-Gleichstroms angeschlossen ist. Der entsprechende Stromsollwert I* kann über einen Funktionsgeber FG am Ausgang eines Drehzahlreglers RN abgegriffen werden. In dieser Offenlegungsschrift ist beschrieben, daß das Ausgangssignal des Drehzahlreglers RN proportional dem Tangens des Lastwinkels ist, d.h. proportional zum Quotienten aus der flußsenkrechten und der flußparallelen Komponente des Ständerstroms. Es handelt sich also um ein winkelähnliches Signal, das bei gegebenem Fluß (d.h. bei einem vorgegebenen Sollwert für die feldparallele Ständerstromkomponente) der Sollwert wl(F)* für den Winkel zwischen dem Ständerstromvektor und dem Flußvektor der Maschine ist. Ein Istwertrechner CAL bildet einen Istwert wl(F), der dem Istwert-Eingang 1 eines Winkelreglers RW zugeführt ist. Der Sollwerteingang 2 des Winkelreglers ist mit dem Ausgang des Drehzahlreglers RN (im allgemeinen Fall einer Eingabeeinrichtung für einen winkelähnlichen Sollwert) verbunden. Der Ausgang des Winkelreglers RW ist mit dem Frequenzsteuer-Eingang 3 des Steuersatzes STW verbunden, der den maschinenseitigen Umrichter WR steuert.

Der bekannte Istwertregler ist über 3/2 Wandler an Meßeinrichtungen MI und MU angeschlossen, die Spannung und Strom der Maschine messen und daraus die Komponenten der entsprechenden Spannungsvektoren und Stromvektoren in einem auf den Ständer bezogenen Bezugssystem bilden. Der Istwertrechner CAL enthält dabei einen Flußrechner CALF, der die Richtung der Flußachse, also praktisch den Winkel wF(S) zwischen Flußachse und Ständerachse, andererseits die zum Fluß parallele Komponente des Ständerstromvektors errechnet. Die jeweils zu errechnende Flußachse parallele und senkrechte Komponente des Ständerstromvektors kann dann aus den Ausgangssignalen der Strom-Meßeinrichtung MI gebildet werden und der Quotient beider Stränderstromkomponenten bestimmt praktisch den Winkel wl(F). Dieser Winkel wl(F) ist somit gleich der Winkeldifferenz zwischen dem Winkel wl(S), den der vom Umrichter WR eingeprägte Ständerstromvektor mit der Ständerachse einschließt, und dem errechneten Winkel wF(S) zwischen der errechneten Feldachse und der Ständerachse. Er stellt den Istwert des Winkelreglers RW dar.

Betrachtet man nur jeweils die Winkel, so arbeitet der bekannte Istwertrechner nach dem in FIG 1 dargestellten Prinzip:

Ein Meßglied MW für den Winkel wl(S), also ein Winkeldetektor, bildet den Winkelistwert wl(S) für die Phasenlage der Umrichter-Ausgangsströme, der auf die Ständerachse bezogen ist. Da der Winkelsollwert wl(F)* des Winkelreglers RW auf die Flußachse, also den Bezugswinkel wF(S) bezogen ist, müssen Istwert wl(S) und Sollwert wl(F)* durch ein entsprechendes Phasenverschiebe-Glied PH auf einen gemeinsamen Referenzwert (hier: die Phasenlage des Flusses) bezogen werden. Als Phasenschiebe-Glied PH könnte deshalb ein Subtraktionsglied dienen, das die Differenz wl(S) - wF(S) aus dem Winkelistwert wl(S) und dem Bezugswinkel wF(S) bildet.

Dem Drehzahlregler RN muß neben dem Drehzahlsollwert ein geeignet erfaßter Drehzahl-Istwert aufgeschaltet werden. In der Offenlegungsschrift wird als Ersatz-Istwert für die Drehzahl die Frequenzsteuergröße fl(S)* vom Frequenzsteuereingang 3 des Steuersatzes STW für den maschinenseitigen Umrichter WR rückgeführt. Durch die Schaltvorgänge im Umrichter WR werden aber der Ständerwicklung pulsartige Ströme zugeführt, um bei hohen Frequenzen den vom Gleichrichter GR eingeprägten Gleichstrom I zu äquidistanten Zeitpunkten auf unterschiedliche Kombinationen der Drehstromeingänge der Maschine zu verteilen. Bei niedrigen Frequenzen werden die einzelnen Phasenströme mit unterschiedlichem Puls/Pausenverhältnis gepulst. Im Blockschaltbild des Steuersatzes STW ist dies dadurch angedeutet, daß das Frequenzsteuersignal fl(S)* in einem Integrator INT zu einem entsprechenden Steuersignal wl(S)* für den ständerbezogenen Phasenwinkel integriert wird, der den Ständerströmen über den Umrichter WR mittels Pulsbreitenmodulation (Modulator MOD) eingeprägt wird. Die pulsförmigen Ständerströme bewirken aber, daß der Winkelistwert wl(S) vorallem im gepulsten Betrieb bei kleinen Frequenzen stark oberschwingungshaltig ist. Dies ist vorallem dann nachteilig, wenn eine digitale Regelung ohne eine Drehzahlerfassung verwendet wird. Auch in anderen Fällen kann es erforderlich werden, die Oberfrequenzen im Winkelistwert wl(S) auszufiltern, wobei die erforderliche Glättung in vielen Fällen sehr stark eingestellt werden muß, um zu einem stabilen Betrieb zu kommen. Dies verschlechtert aber die angestrebte hohe Dynamik des Winkelregelkreises erheblich.

Der Erfindung liegt die Aufgabe zugrunde, für den Phasenwinkel-Regler RW eines Umrichters mit frequenz- und phasensteuerbaren Ausgangsströmen einen weitgehend oberschwingungsfreien Istwert zur Verfügung zu stellen.

Diese Aufgabe wird gelöst durch eine Vorrichtung mit den Merkmalen des Anspruchs 1. Vorteilhafte Weiterbildungen der Erfindung sind in den Unteransprüchen gekennzeichnet.

Zwischen dem Phasendetektor MW und dem Istwerteingang 1 des Phasenwinkel-Reglers RW ist also ein Glättungsglied angeordnet, das in FIG 1 allgemein dargestellt und mit WIC bezeichnet ist.

Aufgabe des Glättungsgliedes ist es, die Grundschwingung $\overline{wl(S)}$ des Winkelistwerts wl(S) auch dann zu ermitteln, wenn der Istwert von Oberschwingungen überlagert ist, deren Amplituden durchaus die Amplitude der Grundschwingung erreichen können. Das Glättungsglied muß also eine starke Glättung, z.B. mit einer Glättungskonstanten deutlich über 5 msec, bewirken. Trotzdem soll eine hohe Dynamik der Winkelregelung erreicht und zumindest im stationären Fall die Grundschwingung $\overline{wl(S)}$ des Winkel-Istwerts phasenrichtig erfaßt werden.

Gemäß der Erfindung ist als Glättungsglied ein elektronischer Beobachter vorgesehen, um einen oberwellenfreien Ersatz-Istwinkel $\overline{wl(S)}$ nachzubilden, der dem Steuerwinkel wl(S)* des Stromes mit einer Phasenverschiebung dl(S) folgt, die der Ansprechverzögerung des Wechselrichters WR entspricht. Diese hängt vom Betriebszustand (z.B. der Frequenz) des Wechselrichters ab und bedingt eine Phasendifferenz zwischen der Grundschwingung des Stromes und dessen Steuerwinkel, d.h. einen endlichen Mittelwert für den Differenzwinkel wl(S) - wl(S)*. Die nachgebildete Phasenverschiebung dl(S) kann daher mittels einer Winkelnachführung für den Ersatz-Istwinkel $\overline{wl(S)} = wl(S)^* + dl(S)$ ermittelt werden, die einen vorgesteuerten Nachführregler enthält und den Differenzwinkel wl(S) - $\overline{wl(S)}$ ausregelt. Bevorzugte Ausführungen dieser Winkelnachführungen sind in den Figuren 2 bis 4 dargestellt.

Gemäß FIG 2 wird einem integralen Regler RS oder einem Regler, der jedenfalls einen wesentlichen integralen Anteil enthält, als Sollwert der vom Phasendetektor MW erfaßte Winkel-Istwert wl(S) und als Istwert der rückgeführte Reglerausgang zugeführt. Bei einer Änderung des Frequenzsteuersignals fl(S)* und einer entsprechenden Änderung von wl(S)* würde ansich der Regler RS eine gewisse Zeit benötigen, bis sein rückgeführtes Ausgangssignal dl(S) am Reglereingang keinen Differenzwinkel mehr erzeugt. Dieser Regelvorgang wird daber ganz wesentlich durch ein Additionsglied AD erhöht, dem das Ausgangssignal dl(S) und das Signal wl(S)* zugeführt ist und dessen Ausgangssignal einerseits auf den Istwerteingang des Reglers RS rückgeführt, andererseits als Signal $\overline{wl(S)}$ auf den Istwerteingang 1 des Winkelreglers RW geführt ist. Das Phasenschiebeglied PH, das den feldorientierten Winkelsollwert wl(F)* und den ständerorientierten Winkel wl(S) auf das gleiche Referenzsignal transformiert, ist hier in das Vergleichsglied integriert, das zur Bildung der Regeldifferenz für den Regler RW erforderlich ist.

In FIG 1 ist mit gestrichelten Linien angedeutet, wie die Regeldynamik der gesamten Steuerung weiter verbessert werden kann. Nach dem Prinzip der Feldorientierung ist der Sollwert für den Ständerstromvektor in einem feldorientierten Koordinatensystem durch Sollwerte für Betrag und Richtung bzw. für die feldorientierten Komponenten vorgegeben. Jede Änderung des Winkels wl(F)* zwischen feldorientiertem Sollstrom-Vektor und der Feldachse wird als entsprechende Phasenänderung über den Stromrichter dem Ist-Ständerstrom der Maschine eingeprägt. In FIG 1 geschieht dies dadurch, daß die Ableitung des Winkels wl(F)*, die mittels eines Differenzierers DIF gebildet wird, als entsprechende Zusatzfrequenz fl(F)* einem zusätzlichen Additionsglied 4 am Frequenzsteuereingang 3 des Steuersatzes STW aufgeschaltet wird. Ferner schreibt die Feldorientierung vor, den Flußwinkel auf die Phase des einzuprägenden Ständerstromes positiv rückzukoppeln. Daher ist in FIG 1 vorgesehen, daß der Flußrechner CALF die zeitliche Ableitung des Feldwinkels wF(S) als entsprechende Feldfrequenz fF(S) ermittelt und ebenfalls dem zusätzlichen Addierer 4 aufschaltet.

Diese Anordnung ermöglicht nun, bei niedrigen Frequenzen einen praktisch oberschwingungsfreien Istwert $\overline{wl(S)}$ - wF(S) für den Winkelregler RW zu bilden und die gesamte Steuerung stabil zu betreiben. Bei höheren Frequenzen enthält der Winkelistwert wl(S) ohnehin bereits keine besonders störenden Oberwellen, in diesem Fall kann die Winkelnachführung WIC außer Kraft gesetzt und überbrückt werden, wie durch einen entsprechenden Schalter SW in FIG 1 dargestellt ist.

In FIG 2 wird dieser Schalter von einem Schwellwertgeber SS angesteuert, der den Regler RS auf den Istwerteingang 1 des Reglers RW schaltet, solange die Frequenz fF(S) oder die Steuergröße fl(S)* unter einem vorgegebenen Grenzwert liegt. Bei Überschreitung des Grenzwerts wird der Schalter SW auf einen Schaltereingang umgelegt, dem der Winkelistwert wl(S) ungefiltert zugeführt ist.

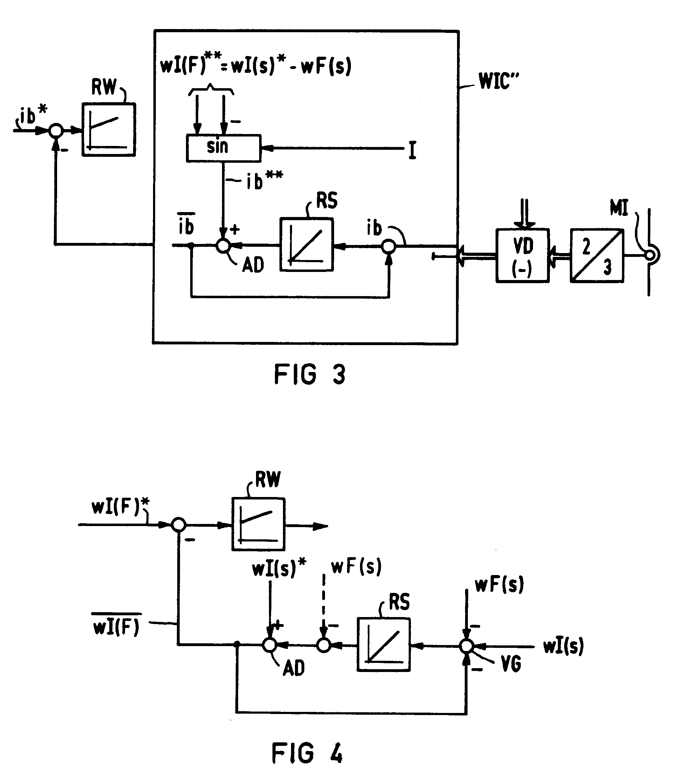

Bei einer anderen Variante ist die Phasenschiebeeinrichtung PH dem Istwerteingang des Winkelreglers RW nicht unmittelbar vorgeschaltet, sondern bereits in Form eines Vektordrehers VD(-) am Eingang des Glättungsgliedes integriert. Dieser Fall liegt häufig bei herkömmlichen Regelungen vor, bei denen am Drehzahlregler ein Sollwert ib* für den Wirkstrom abgegriffen und der entsprechende Istwert ib mittels des Vektordrehers aus dem Feldwinkel wF(S) und den Istwerten der Phasenströme gewonnen wird. FIG 3 zeigt die hierzu verwendeten Elemente, die durch das Glättungsglied "WIC" ergänzt werden.

Da der Wirkstrom die zur Feldachse senkrechte Komponente des Stromes ist, ist der Istwert eine winkelähnliche Größe, die mathematisch durch ib = I . sin (wl(F)) mit wl(F) = wl(S) - wF(S) beschreibbar ist. Für die Vorsteuerung des Nachführreglers RS wird nun nicht der am Eingang des Winkelreglers RW an stehende Sollwert ib*, sondern ein Wert ib** = I . sin (wl(F)**) verwendet, der in einem multiplizierenden Funktionsgeber "sin" aus der Stromamplitude I und einem Winkel wl(F)** = wl(S)* - wF(S) errechnet ist.

Das Glättungsglied liefert dann eine Größe $\overline{ib}$, wobei der Nachführregler dafür sorgt, daß die Differenz ib - $\overline{ib}$ = I . sin (wl(F)) - $\overline{ib}$ im Mittel zu Null wird.

Diese Variante liefert zwar einen Ersatzistwert $\overline{ib}$, der Oberschwingungen enthält, sofern der Multiplikatoreingang des Funktionsgebers "sin" am Istwerteingang des Reglers RI abgegriffen ist. Der Oberfrequenz-Bereich des Amplituden-Istwertes I liegt jedoch - im Gegensatz zu den Oberschwingungen des Winkels wl(S) - in einem Bereich, der für die gesamte Regelstruktur häufig unkritisch ist.

Während also in FIG 2 eine "polare Regelung" für den ständerbezogenen Winkel wl(S) gezeigt ist (die Regeldifferenz des Winkelreglers ist aus der polaren Winkelkomponente des Stromvektors gebildet und das Glättungsglied WIC′ glättet den Winkelistwert wl(S) des ständerbezogenen Stromvektors), stellt FIG 3 eine "kartesische Regelung" für den feldorientierten Stromvektor dar, da das Glättungsglied WIC" die kartesische flußsenkrechte Stromkomponente ib = I · sin (wl(F)) glättet, die als winkelähnlicher Wert an die Stelle des Lastwinkels wl(F) tritt und vom Winkelregler RW auf den Sollwert ib* dieser kartesischen feldorientierten Stromkompoenente geregelt wird.

Die Regelung kann aber auch feldorientiert wie in FIG 3, aber polar wie in FIG 2 vorgenommen werden. Dies zeigt FIG 4, wo an die Stelle des Vektordrehers VD(-) aus FIG 3 jetzt die Vergleichsstelle VG am Eingang des Nachführreglers RS tritt und RS jetzt den rückgeführten Winkel $\overline{wl(F)}$ auf den Mittelwert des Istwinkels wl(F) = wl(S) - wl(F) ausregelt.

Die Vorsteuerung hat an sich dann mit dem Winkel wl(F)** = wl(S)* - wF(S) aus FIG 3 zu erfolgen. Da sich jedoch wF(S) gegenüber wl(S)* nur langsam ändert, kann bei manchen Anwendungsfällen die Aufschaltung von wF(S) am Additionsglied AD unterbleiben, ohne die Dynamik der Regelung wesentlich zu verschlechtern.

Die hier am Beispiel eines Umrichters mit vorgegebenem Eingangsgleichstrom geschilderte Erfindung kann auch auf andere Umrichter angewendet werden, die durch eine Phasenregelung den Ständerströmen der Drehfeldmaschine (allgemeiner: den Wechsel- oder Drehströmen einer entsprechenden Last) einen Sollwert für die Phase der Ströme einprägen. Außerdem kann es auch bei Regelungen, die an sich einen Drehzahl-Istwertgeber besitzen, erforderlich sein, eine Glättung des Phasenistwertes vorzunehmen, die die Dynamik des Phasenregelkreises nicht beeinträchtigt.

## Patentansprüche

1. Vorrichtung zur Lastwinkelregelung eines Stromrichters mit Wechselstromausgang, insbesondere zur Speisung einer Drehfeldmaschine (M), mit

a) einem Winkeldetektor (MW), der einen Winkelistwert (wl(S)) für die Phasenlage der Umrichter-Ausgangsströme bildet,

b) einem Winkelregler (RW), dessen Istwert-Eingang (1) mit dem Winkeldetektor verbunden ist und dessen Sollwert-Eingang (2) ein Winkelsollwert (wl(F)*) zugeführt ist, und
c) einem Steuersatz (STW) mit einem an den Ausgang des Winkelreglers angeschlossenen Frequenzsteuereingang (3), dessen Ausgangssignal (fl(S)*) den Umrichter (WR) steuert,
gekennzeichnet durch eine zwischen den Winkeldetektor (MW) und den Istwert-Eingang (1) des Winkelreglers (RW) geschaltete Winkelnachführung (WIC), enthaltend

– einen Nachführregler (RS) mit integralem Anteil, dessen Sollwerteingang der Winkelistwert (wl(S)) aufgeschaltet ist und
– ein Additionsglied (AD), dem das Ausgangssignal des Nachführreglers (RS) und ein aus dem Ausgangssignal des Winkelreglers (RW) gebildetes, dem Integral der Umrichterfrequenz (fl(S)*) entsprechendes Winkel-Vorsteuersignal (wl(S)*) zugeführt ist und dessen Ausgang mit dem Istwert-Eingang des Nachführreglers (RS) und dem Istwert-Eingang (1) des Winkelreglers (RW) verbunden ist.

2. Vorrichtung nach Anspruch 1, gekennzeichnet durch einen Bezugsgrößen-Rechner (CALF), der aus Betriebsgrößen des Umrichters und/oder einer an den Umrichter angeschlossenen Last einen Bezugswinkel (wF(S)) für den Winkelsollwert bildet, und ein vom Bezugswinkel beaufschlagtes, dem Istwert oder Sollwerteingang des Winkelreglers (RW) vorgeschaltetes Phasenverschiebe-Glied (PH).

3. Vorrichtung nach Anspruch 1, **gekennzeichnet** durch ein zwischen dem Winkelregler (RW) und dem Steuereingang des Steuersatzes angeordnetes zusätzliches Additionsglied (AD) dem die zeitliche Ableitung (fl(F)*) des Winkelsollwertes (wl(F)* aufgeschaltet ist.

4. Vorrichtung nach Anspruch 1, **gekennzeichnet** durch einen Bezugsgrößen-Rechner, der aus Betriebsgrößen des Umrichters und/oder einer an den Umrichter angeschlossenen Last die zeitliche Ableitung (fF(S)) eines Bezugswinkels für den Winkelsollwert bildet, und ein zwischen dem Winkelregler und dem Steuereingang des Steuersatzes angeordnetes, zusätzliches Additionsglied (4), dem die zeitliche Ableitung des Bezugswinkels zugeführt ist.

## Claims

1. Device for the load angle control of a power converter with alternating current output, in particular for the supply of a rotary field machine (M), having

    a) an angle detector (MW) which forms an actual angle value (wl(S)) for the phase angle of the converter output currents,

    b) an angle control (RW), the actual value input (1) of which is connected to the angle detector and to the desired value input (2) of which a desired angle value (wl(F)*) is supplied, and

    c) trigger equipment (STW) with a frequency control input (3) attached to the output of the angle control, the output signal (fl(S)*) of which controls the converter (WR),

    **characterized** by an angle compensator (WIC) connected between the angle detector (MW) and the actual value input (1) of the angle control (RW), containing

        – a compensating control (RS) with integral portion, to the desired value input of which the actual angle value (wl(S)) is applied and

        – an addition element (AD), to which there is supplied the output signal of the compensating control (RS) and an angle precontrol signal (wl(S)*) formed from the output signal of the angle control (RW) and corresponding to the integral of the converter frequency (fl(S)*) and the output of which is connected to the actual value input of the compensating control (RS) and the actual value input (1) of the angle control (Rw).

2. Device according to claim 1, **characterized** by a reference variable calculator (CALF), which forms from operational variables of the converter and/or a load attached to the converter a reference angle (wF(S)) for the desired angle value, and a phase-displacing element (PH) loaded by the reference angle and connected in series with the actual value or desired value input of the angle control (RW).

3. Device according to claim 1, **characterized** by an additional addition element (AD) arranged between the angle control (RW) and the control input of the trigger equipment, to which the temporal derivation (fl(F)*) of the desired angle value (wl(F)* is applied.

4. Device according to claim 1, **characterized** by a reference variable calculator, which forms from operational variables of the converter and/or a load attached to the converter the temporal derivation (fF(S)) of a reference angle for the desired angle value, and an additional addition element (4) arranged between the angle control and the control input of the trigger equipment, to which the temporal derivation of the reference angle is supplied.

## Revendications

1. Dispositif pour régler l'angle de charge d'un convertisseur statique comportant une sortie à courant alternatif, notamment pour l'alimentation d'une machine à induction (M), comportant

    a) un détecteur d'angle (MW), qui forme la valeur réelle de l'angle (wl(S)) pour la position de phase des courants de sortie d'un mutateur,

    b) un régulateur d'angle (RW) dont l'entrée de valeur réelle (1) est raccordée au détecteur d'angle et à l'entrée de valeur de consigne (2) duquel est envoyée une valeur de consigne de l'angle (wl(F)*), et

    c) une unité de commande (STW) comportant une entrée (3) de commande de la fréquence, qui est raccordée à la sortie du régulateur d'angle et dont le signal de sortie (fl(S)*) commande le mutateur (WR),

    **caractérisé** par une unité (WIC) d'asservissement de l'angle qui est branchée entre le détecteur d'angle (MW) et l'entrée de valeur réelle (1) du régulateur d'angle (RW) et qui comporte

        – un régulateur à asservissement (RS) comportant une partie intégrale, à l'entrée de valeur de consigne duquel est appliquée la valeur réelle de l'angle (wl(S)), et

– un circuit additionneur (AD), auquel sont envoyés le signal de sortie du régulateur à asservissement (RS) et un signal de commande pilote de l'angle (wl(S)*), qui est formé à partir du signal de sortie du régulateur d'angle (RW) et qui correspond à l'intégrale de la fréquence (fl(S)*) du mutateur, et dont la sortie est raccordée à l'entrée de valeur réelle du régulateur à asservissement (RS) et à l'entrée de valeur réelle (1) du régulateur d'angle (RW).

2. Dispositif suivant la revendication 1, **caractérisé** par un calculateur (CALF) d'une grandeur de référence, qui forme, à partir de grandeurs de référence du mutateur et/ou d'une charge raccordée au mutateur, un angle de référence (wF(S)) pour la valeur de consigne de l'angle, et un circuit de déphasage (PH) chargé par l'angle de référence et branché en amont de l'entrée de valeur réelle ou de valeur de consigne du régulateur d'angle (RW).

3. Dispositif suivant la revendication 1, **caractérisé** par un circuit additionneur supplémentaire (AD) disposé entre le régulateur d'angle (RW) et l'entrée de commande de l'unité de commande et auquel est envoyée la dérivée dans le temps (fl(F)*) de la valeur de consigne de l'angle (wl(F)*).

4. Dispositif suivant la revendication 1, **caractérisé** par un calculateur d'une grandeur de référence, qui forme, à partir de grandeurs de fonctionnement du mutateur et/ou d'une charge raccordée au mutateur, la dérivée dans le temps (fF(S)) d'un angle de référence pour la valeur de consigne de l'angle, et un circuit additionneur supplémentaire (4) qui est disposé entre le régulateur d'angle et l'entrée de commande de l'unité de commande et auquel est envoyée la dérivée dans le temps de l'angle de référence.

FIG 1

FIG 2

RW

$ib^*$

$wI(F)^{**} = wI(s)^* - wF(s)$

$-$

sin

I

WIC″

$-ib^{**}$

RS

$\overline{ib}$  $+$

$ib$

AD

VD
(–)

MI

2/3

**FIG 3**

RW

$wI(F)^*$

$-$

$wI(s)^*$  $wF(s)$

RS

$wF(s)$

$\overline{wI(F)}$

$+$

$-$

$-$

$wI(s)$

AD

VG

$-$

**FIG 4**